# EUROPEAN PATENT APPLICATION

(11) **EP 2 100 510 A1**
(43) Date of publication of application: **16.09.2009**
(21) Application number: 09250668.2
(22) Date of filing: 10.03.2009
(51) Int. Cl.: A21C 5/00, A21C 9/04

(54) **Valve assembly and method of operation**

(30) Priority: 11.03.2008 GB 0804500
(71) Applicant: WYMBS Engineering Limited, Macclesfield, Cheshire SK10 5JZ (GB)
(72) Inventor: Wymbs, Brendan, Macclesfield Cheshire, SK10 5JZ (GB)
(74) Representative: Moore, Graeme Patrick

(57) **Abstract**

A valve assembly (10) for controlling the flow of a fluid from a dispensing nozzle (50), the valve assembly including:
a shutoff member (30) movable between an open position and a closed position to control the flow of fluid from the nozzle (50);
an ingate member (20) located upstream relative to the shutoff member (30), the ingate member (20) partly defining a fluid chamber, the ingate member (20) being movable between an open position and a closed position thereby controlling the flow of fluid into the fluid chamber; and
a piston (40) slidable in the fluid chamber; wherein
when the ingate member (20) is in the closed position and the shutoff member (30) is in the open position, the piston (40) is slidable from a first position to a second position thereby urging fluid in the fluid chamber to flow between the fluid chamber and the nozzle (50). A method of operation of the valve (10) including the steps of:
(i) moving the shutoff member (30) to the closed position
(ii) moving the ingate member (20) to the open position
(iii) moving the piston (40) to the first position
(iv) moving the ingate member (20) to the closed position
(v) moving the shutoff member (30) to the open position
(vi) moving the piston (40) from the first position to the second position.

## Description

The present invention relates to a valve assembly for controlling the flow of a pumpable mass such as a fluid, e.g. a foodstuff, to provide metered doses thereof.

It is often desirable to be able to provide metered doses of a pumpable mass such as a fluid. In particular, it is desirable that the volume of a metered dose can be accurately controlled relative to the volume of the or each other metered dose.

For example, in the food manufacturing and processing industry food items such as biscuits can be produced by depositing a fluid, such as a dough or batter, onto a conveyor belt which may subsequently convey the fluid to an oven for baking into a final food product. The fluid may be intended to provide a decorative topping or a filling, for example, which may be applied to the pre-baked (or indeed a post-baked) product.

It is important that the fluid be dispensed both in a repeatable and in a controllable manner.

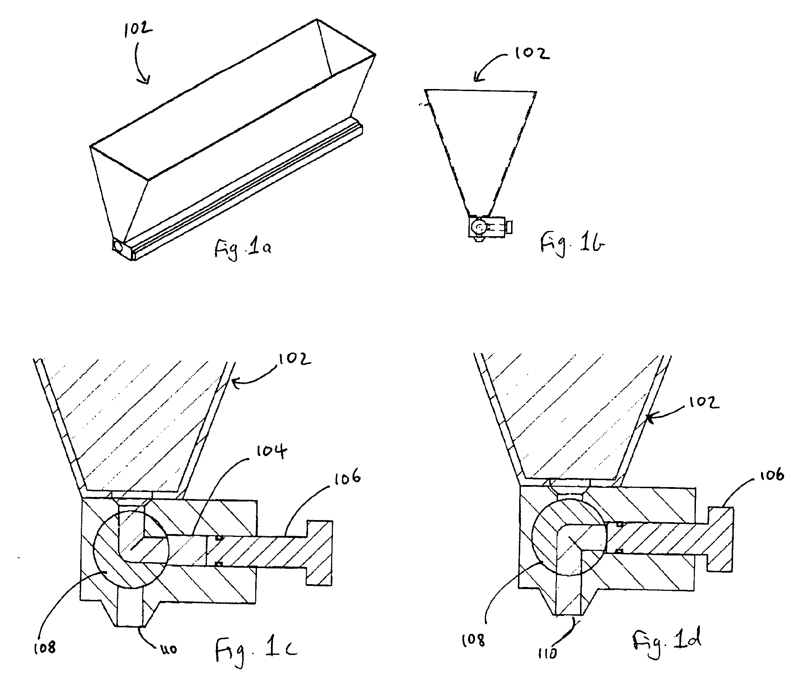

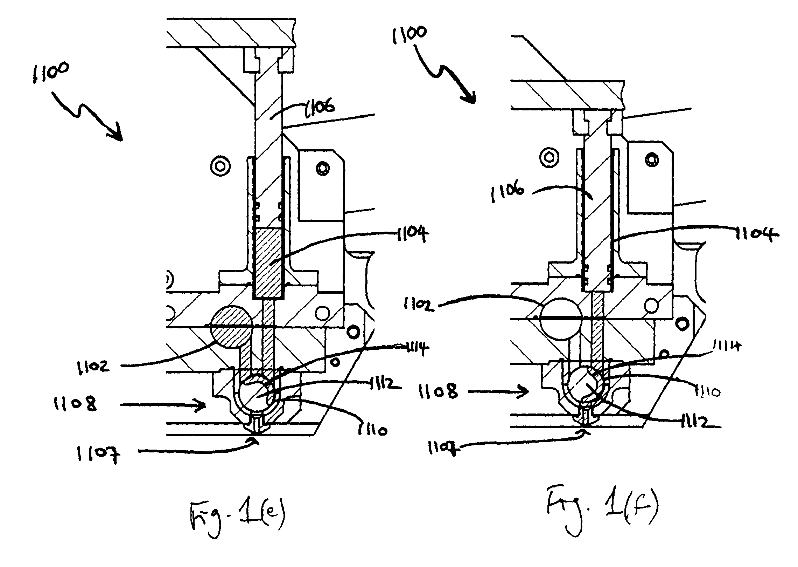

Accordingly, a known fluid dispensing apparatus 100 as shown in Fig.1 has been used hitherto, in which a hopper 102 is connected by a movable L-ported valve 108 to a chamber 104, in which is slidable a piston 106. The L-ported valve 108 is rotatable between a first position in which it provides fluid communication between the hopper 102 and the chamber 104, and a second position in which it provides fluid communication between the chamber 104 and a dispensing conduit or nozzle 110.

In use, the hopper is filled with a fluid, e.g. a food product such as an aerated fluid, from a continuous mixer (not shown) to an acceptable working level before commencement of depositing. During this step the aerated fluid is able to expand, and gas from the aerated fluid is able to escape from the mix. This is disadvantageous as it may have a negative impact on the quality and/or appearance of the final product.

Also, the product often does not move in a controlled manner from the hopper into the L-ported valve, as it can tend to cling to the side walls of the hopper. The hopper can be water jacketed to try to ameliorate this, but this has a limited effect as there is often a large volume of fluid in the hopper. A modified apparatus includes slow speed agitators fitted to the hopper to try to urge the fluid from the hopper.

A lid is sometimes included on the hopper to try to prevent the loss of gas from an aerated fluid in the hopper, by keeping the fluid under a suitable positive pressure.

However, these modifications do not prevent a coring effect which takes place as the piston scavenges fluid from individual points at the base of the hopper, thereby leaving deadspots in the hopper where product can remain for an undue length of time.

Fluid is scavenged from the hopper and fed into the piston cavity via an L-ported valve. After the piston chamber is filled, the L-ported valve is rotated to shut off the connection between the chamber and the hopper, and to establish instead a connection between the chamber and the dispensing conduit or nozzle. The piston can then urge the fluid in the chamber to be dispensed through the nozzle.

However, the above-described valve assembly can damage the cell structure of an aerated fluid which passes through it because the fluid passes along a relatively tortuous path. This can also negatively affect the viscosity of the fluid. In the food manufacturing and processing industry in particular, it is highly desirable that the cell structure and the viscosity of the fluid is not unduly altered by passing the fluid through the dispensing apparatus.

There may be provided a plurality of chambers, pistons and associated deposition nozzles or conduits, each being controlled by a single spindle having a plurality of L-ports each associated with a respective chamber and dispensing nozzle or conduit, thereby forming a common valve member to each chamber and piston. This may make it more difficult to clean the apparatus in situ.

An example of a different arrangement of valve is shown in Figs. 1e and 1f in a dispensing apparatus 1100. This valve arrangement could replace the valve arrangement discussed above. The dispensing apparatus 1100 includes a conduit 1102 for supplying a fluid, a piston cavity 1104 in which is movable a piston 1106, a dispensing nozzle 1107 for dispensing the fluid and a valve assembly 1108 including a chamber 1110 housing a spindle 1112 having a guide means 1114, e.g. formed as a recess in the spindle 1112. The spindle 1112 is rotatable in the chamber 1110 such that: when it is rotated into a first position, the conduit 1102 is put in fluid communication with the piston cavity 1104 via the guide means 1114; and when it is rotated into a second position, the piston cavity 1104 is put in fluid communication with the dispensing nozzle via the guide means 1114. In the second position, the spindle 1112 isolates the piston cavity from the conduit 1102, so that when the piston 1106 is moved into the piston cavity 1104, fluid in the piston cavity is urged from the piston cavity, via the guide means 1114, to be dispensed via the dispensing nozzle 1107.

Often there is a plurality of piston cavities 1104, each having a respective dispensing nozzle 1107, arranged along the length of one spindle 1112; the spindle 1112 being configured to provide a respective guide means 1114 for each piston cavity 1104 and associated dispensing nozzle 1107. Therefore, dispensing of fluid from all of the dispensing nozzles 1107 associated with a particular spindle 1112 can be controlled by rotating one spindle.

However, this alternative valve assembly can also tend to damage the cell structure of an aerated fluid which passes through it, and can also adversely affect the viscosity of the fluid, for similar reasons to those given above.

Also, another consideration is that both the spindle 1112 and the chamber 1110 must be accurately machined to ensure that the fluid does not leak between them other than via the guide means 1114. Such accurate machining can be expensive and time consuming.

In the food manufacturing industry food items such as biscuits have decorative toppings in particular shapes. For efficiency, throughput and consistency reasons, mechanical deposition systems are often used to deposit such decorative toppings.

Such mechanical deposition systems may include a movable deposition means arranged over a conveyor belt. The deposition means may be movable in the sense that it can be made to describe a particular shape with respect to food items travelling with the conveyor belt. Typically, the deposition means is movable independently of the conveyor belt. The movement of the means is powered and controlled by suitable arrangements of linear drives, for example suitable arrangements of ball screws and pulleys.

However, as a result of the physical size and weight of the hopper, and the associated dispensing valve arrangement(s) discussed above, this can be problematic to implement effectively.

Also, more generally, it is often desirable to perform a repetitive process on a series of similar items. Typically, items are transported around a production facility using a conveyor belt or similar means. If the items are relatively small, or if the production line has a large output, the items may be arranged in ranked rows on the conveyor belt.

In GB patent no. 2371845 the present applicant outlines a movement output apparatus (known as ORBIS) for controllably moving a movement output means in at least two spatial dimensions for accurately dispensing in one or more predetermined locations a fluid, such as the dough, batter topping or filling mentioned above. However, the ORBIS system might have difficulty in moving the hopper and valve arrangement described above to achieve accurate spatial positioning of the deposited fluid, e.g. on the conveyor belt mentioned above. In particular, the mass of the hopper and valve arrangement coupled with the need to fill the hopper to a working level, which may mean 40 to 50 litres or more of product, means that the overall mass of the depositing system might be prohibitively large.

Indeed, the need to fill the hopper with 40 to 50 litres, or more, of product can be detrimental to the product itself, by virtue of the force exerted on the product at the bottom of the hopper as a result of the mass of the product above it.

The present invention attempts to provide a solution to the above problems. Accordingly, a first aspect of the present invention provides a valve assembly for controlling the flow of a fluid from a dispensing nozzle, the valve assembly including:
a shutoff member movable between an open position and a closed position to control the flow of fluid from the nozzle;
an ingate member located upstream relative to the shutoff member, the ingate member partly defining a fluid chamber, the ingate member being movable between an open position and a closed position thereby controlling the flow of fluid into the fluid chamber; and
a piston movable, preferably slidable, in the fluid chamber;
wherein
when the ingate member is in the closed position and the shutoff member is in the open position, the piston is slidable from a first position to a second position thereby urging fluid in the fluid chamber to flow between the fluid chamber and the nozzle.

The fluid is able to progress through the valve assembly and out through the nozzle without the need to be pumped back on itself. This is advantageous, for example, in helping to maintain the integrity of the cell structure of an aerated fluid as it passes through the valve.

Furthermore, as there are at least two members in the valve assembly which are ultimately capable of controlling the flow of fluid from the nozzle, the flexibility and control of the assembly is increased relative to the prior art, and the assembly can deliver a volume of fluid at a variable cycle rate through the nozzle.

The piston may include a bore along its sliding axis, and the shutoff member may be movable within the bore to control the flow of fluid from the nozzle. Thus, the valve assembly can be kept compact, for example, which is desirable where a large number of nozzles and associated valve assemblies may be arranged in an array to deposit e.g. foodstuffs onto a moving conveyor belt. Indeed, the shutoff member being slidable to control the flow of fluid from the nozzle may be advantageous in helping to maintain the integrity of the cell structure of an aerated fluid because the sliding motion may give rise to less damaging shear forces in the fluid than a shutoff member which rotates against the fluid.

A valve seat may be provided, against which the ingate member abuts when in the closed position. The nozzle may be in fluid communication with the fluid chamber via an aperture, the shutoff member plugging said aperture when in the closed position, thereby providing a compact means of controlling the flow to the nozzle. The aperture may be provided in the valve seat.

Preferably, the ingate member is arranged to surround at least a portion of the length of the piston, for example at least when the piston is in the second position and the ingate member is in the closed position. As such, when the ingate member opens and the piston is already in the first position (or the piston is subsequently withdrawn to the first position), fluid is able to enter the region of the fluid chamber in e.g. a generally radial manner (albeit that the ingate member may not be of circular cross-section), thereby helping to maintain the viscosity of the fluid and, in the case of aerated fluids, helping to maintain the cell structure of the fluid.

Preferably, a portion of the shutoff member, of the piston and of the ingate member combine to partly define the fluid chamber. A portion of the valve seat, if included, may also partly define the fluid chamber. By varying the location of the second position of the piston relative to the other elements partly defining the fluid chamber, the volume of the fluid chamber can be correspondingly altered. Indeed, by partly forming the fluid chamber in this way, the volume of dispensed fluid can be controlled in a repeatable and controlled manner, meaning that micro- or macro- cell structure masses can be correspondingly dispensed.

When the ingate member is in the closed position, the shutoff member is in the closed position and the piston is in the first position, the fluid chamber may be provided as an annulus extending along at least a portion of the shutoff member.

By annulus it is not only meant a circular annulus, but any solid planar shape having an aperture. Where the annulus is intended to be circular, a circular annulus will be referred to.

The fluid chamber may be provided as a circular annulus extending along at least a portion of the shutoff member, thereby providing a substantially cylindrical volume for containing the fluid to be dispensed, and thereby helping to ensure an even and balanced distribution of pumpable mass in the fluid chamber.

A first actuator means for moving the shutoff member between the open and closed positions may be provided. A second actuator means for moving the piston between the first and second positions may be provided. A third actuator means for moving the ingate member between the open and closed positions may be provided.

The valve assembly may be included in a fluid dispensing system. The fluid dispensing system may have a first group of a plurality of nozzles, each nozzle being associated with a respective valve assembly described above.

The fluid dispensing system may include a movable conveyor belt, arranged to cycle passed the or each nozzle. A detector may be provided for determining the presence of one or more bodies on the conveyor belt proximate to the or each nozzle. A control means may be provided which, on the basis of said determination, controls whether the valve assembly allows fluid to be dispensed from a nozzle.

For example, if the fluid to be dispensed is a topping or filling for e.g. a biscuit, the controller may only allow a nozzle to dispense a dose of the fluid if a host body, e.g. a biscuit, is present on the conveyor proximate the relevant nozzle, thereby avoiding a dose of the fluid being dispensed directly onto the conveyor belt erroneously.

The arrangement of the piston and the respective shutoff and ingate members, which may be controlled by one or more actuators, provides a stabilizing feature to an intermittent depositing cycle, resulting in an aerated fluid maintaining its cell structure within the system, expansion of such a fluid may thus only take place as the fluid is dispensed. This is highly desirable in certain circumstances, as it can have an affect on the appearance of the final product, and on the final volume of the fluid subsequent to being dispensed.

The ingate member and the shutoff member may be controlled by a common control means to have a fixed cycle with respect to one another. The common control means may include one or more actuators.

Here an actuator may be a servo controlled actuator, or it may be a pneumatic actuator, or it may be a hydraulic actuator, or a combination of any of these.

In another aspect, the present invention provides a method of operating a valve assembly according to the first aspect, the method including the steps of:
(i) moving the shutoff member to the closed position
(ii) moving the ingate member to the open position
(iii)moving the piston to the first position
(iv) moving the ingate member to the closed position
(v) moving the shutoff member to the open position
(vi) moving the piston from the first position to the second position.

Steps (ii) and (iii) are preferably performed substantially simultaneously.

The method may include the step of maintaining a fluid introduced to the fluid chamber within a predetermined pressure range when performing step (vi), thereby helping to maintain the cell structure of an aerated fluid.

The method may include the step of determining the presence of a body proximate to the nozzle, the method may also include the step of controlling the valve assembly to dispense fluid from the nozzle on the basis of said determination.

In a particularly preferred arrangement one or more valve assemblies according to the first aspect may be included in a manifold, each valve assembly being in fluid communication with a supply gallery provided in said manifold, the supply gallery being suppliable with an aerated fluid under pressure. Advantageously, such an arrangement means that a relatively small volume of e.g. aerated fluid can be supplied to the valve arrangement at any one time for dispensing. Also, because the e.g. aerated fluid is suppliable under pressure, the fluid is not permitted to expand prematurely, nor is gas permitted to escape from the aerated fluid prematurely, this can help to improve the quality and appearance of the final product.

The present invention will now be described by way of example, in which:
Fig. 1a shows a known hopper and valve assembly;
Fig. 1b shows the known hopper and valve assembly viewed in cross-section;
Fig. 1c shows a close up cross-sectional view of the known valve assembly in the chamber filling position;
Fig. 1d shows a close up cross-sectional view of the known valve assembly in the product depositing position;
Fig. 1e shows an alternative known valve assembly arrangement in a chamber filling arrangement;
Fig. 1f shows the alternative known valve assembly arrangement in a product dispensing arrangement;
Fig. 2 shows a schematic of a deposition system including a valve assembly according to the present invention;
Fig. 3 shows three phases of operation (A), (B) and (C) of a valve according to the present invention;
Fig. 4 shows three phases of operation (A), (B) and (C) of a valve according to the present invention;
Fig. 5a shows a plan view of an array of valves according to the present invention;
Fig. 5b shows a cross section of a dispensing system according to the present invention;
Typically, foodstuffs such as batter and dough etc., are formed in a mixer and subsequently fed into a hopper to be scavenged (or nipped) e.g. by rollers into a piston/block assembly. The foodstuff may then be dispensed from a piston/block assembly as shown in Figs. 1c to 1f.

However, the present applicant has realized that such an aggressive treatment of the foodstuff, which may be an aerated fluid, can be detrimental to the final appearance and structure of the finished product. In particular, where the foodstuff is an aerated fluid, scavenging from the hopper in this way can damage the cell structure of an aerated fluid - as can the use of the known valve assemblies described above.

Therefore, the applicant prefers to extract the mixed product (possibly as an aerated fluid) from the mixer by pumping it out, as a pumpable mass, via a feeder conduit to the piston/block assembly for subsequent deposition e.g. onto a conveyor belt. This is less detrimental to the cell structure of an aerated fluid than using a hopper. Indeed, in the prior art, as much as 40 to 50 litres of product may be held in the hopper, and dead spots may be formed where the product remains for many hours. This can lead to degradation of the mixed product, and if the mixed product is a foodstuff, this could have health and safety implications. Furthermore, the mixed product may be an aerated fluid and even in regions other than dead spots, it may be agitated sufficiently to damage the cell structure of the aerated fluid.

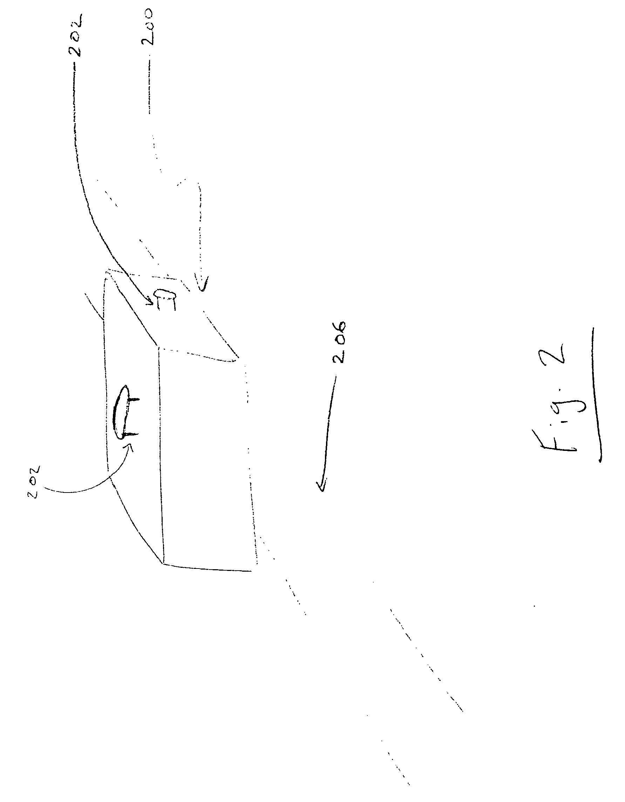

Fig. 2 shows a general schematic of a piston/block assembly 200 which includes a valve assembly according to the present invention and which overcomes these problems. The assembly 200 has a port 202 for accepting a pumpable mass, e.g. an aerated fluid, from a mixer (not shown) via suitable pipework (also not shown). The product is distributed within the assembly 200 via galleries (not visible) which maintain system pressure to each of a plurality of nozzles (not visible) for depositing the pumpable mass on to a conveyor belt 206. For example, the velocity and/or pressure of the product in the pipework and the piston/block assembly, including the galleries, can be maintained to be substantially constant by only including slow bends within thin walled sanitary conduits, for example.

The or each gallery can act as a reservoir for supplying product, e.g. a pumpable mass such as an aerated fluid, to the or each valve assembly. Preferably, the volume of the reservoir is between 1 and 2 litres, e.g. 1.5 litres, but it could be between 1 and 5 litres or even 1 and 10 litres.

Advantageously, the assembly 200 is preferably not attached to a hopper. Hoppers are often large and heavy. Thus, avoiding the use of a hopper means that the assembly 200 can be used in conjunction with the applicant's ORBIS technology to allow movement of the assembly 200 as described in GB patent no. 2371845. Preferably, the assembly 200 is configured so that when it is coupled with the ORBIS technology, the return to the start position of the mechanical movement of the assembly 200 is faster than the forward motion in which deposition takes place. Indeed, it is envisaged that such coupling can allow the present valve assembly to deposit metered doses of product at the rate of 60 to 100 doses per minute.

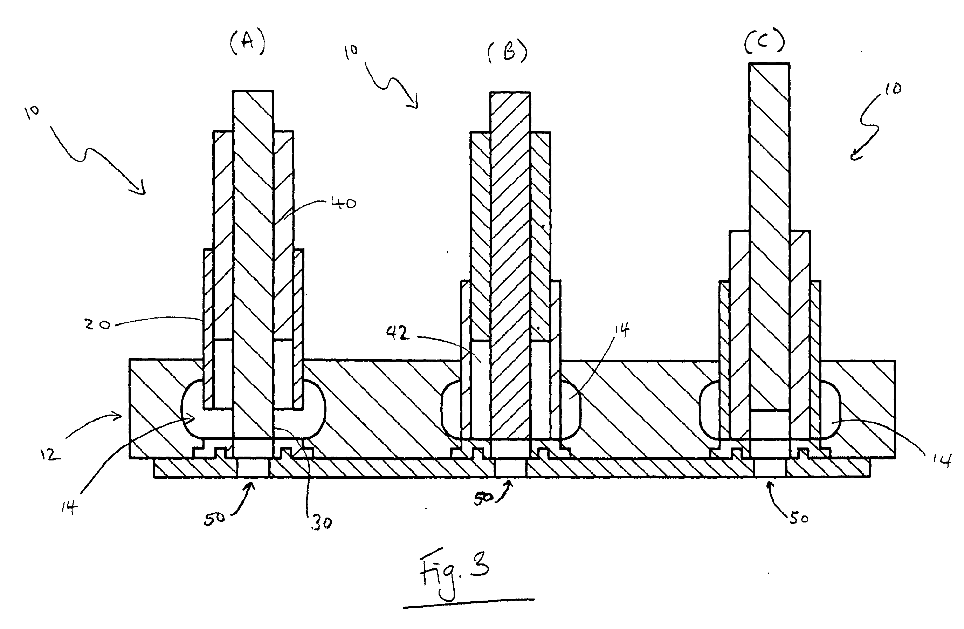

The present applicant avoids detriment to the cell structure of an aerated fluid dispensed by such a piston/block assembly by using a valve assembly according to the present invention, as shown in e.g. Fig.3. Fig.3 shows a valve assembly 10 in each of three phases of operation (A), (B) and (C).

A valve assembly 10 according to present invention may be mounted in a manifold 12 having a product gallery 14 in which a pumpable mass, such as an aerated fluid, can be conveyed e.g. under pressure, to the valve assembly 10. The system pressure for driving the pumpable mass may be 7bar relative to atmosphere.

The valve assembly 10 includes an ingate member 20, a shutoff member 30 and a piston 40. The shutoff member 30 is preferably movable, more preferably slidable, to close, e.g. to plug, a dispensing nozzle 50 for dispensing the pumpable mass e.g. onto a conveyor belt.

The shutoff member is preferably slidable in a bore or lumen formed in the piston 40. The bore or lumen is preferably formed along a central axis of a preferably generally cylindrical piston 40. This can provide a more uniform routing for the pumpable mass, and where the pumpable mass is an aerated fluid, the final product benefits from this because the integrity of the cell structure is not compromised.

The piston is movable, preferably slidable, within the ingate member 20, the ingate member being movable, preferably slidable, to control the ingress of pumpable mass from the gallery 14 to a piston chamber 42 preferably formed between the ingate member 20 and the shutoff member 30. The shutoff member 30 may be provided as a check valve between the piston chamber and the nozzle.

The operation of the valve has three main phases. In phase (A) shown in Fig. 3, the shutoff member 30 is arranged in the closed position to plug the nozzle 50, whilst the piston 40 is arranged in a first position to leave at least a portion of the piston chamber 42 empty to receive the pumpable mass, and the ingate member 20 is arranged in the open position to permit the pumpable mass to move into the piston chamber 42.

The relative position of the piston 40 in the piston chamber 42 may contribute to the determination of the volume of pumpable mass which is ultimately dispensed. Preferably, the pumpable mass is urged under pressure to fill the empty portion of the piston chamber 42.

Subsequently, in phase (B), the ingate member 20 is moved to the closed position, thereby closing the piston chamber 42 to the gallery 14 and preventing the ingress of any further pumpable mass to the piston chamber 42 during phase (B), and preferably during phase (C). The ingate member 20 may be a cylindrical member substantially surrounding at least a portion of the length piston 40, at least when it is in the closed position.

In phase (B), a column of pumpable mass is provided in the piston chamber 42. The core of the column may include the shutoff member 30, as shown in Fig. 3.

In phase (C), the shutoff member 30 is moved to the open position, e.g. to unplug the nozzle 50, and the piston 40 is moved into the piston chamber 42 to urge pumpable mass from the piston chamber 42 out through the nozzle 50. The movement of the shutoff member 20 and the piston 40 may occur substantially simultaneously. Preferably, the shutoff member 30 is moved to the open position, e.g. to unplug the nozzle 50, before the piston begins its movement through the piston chamber 42.

At the end of phase (C), a further phase, phase (D), may be included to return the system to phase (A). In phase (D), before the shutoff member 30 is moved to reclose, e.g. replug, the nozzle 50, the piston 40 is withdrawn from the piston chamber 42, at least by a small amount, in order to suck back a small amount of the pumpable mass from the nozzle 50. This "suck back" can prevent tailing of the pumpable mass deposited from the nozzle 50.

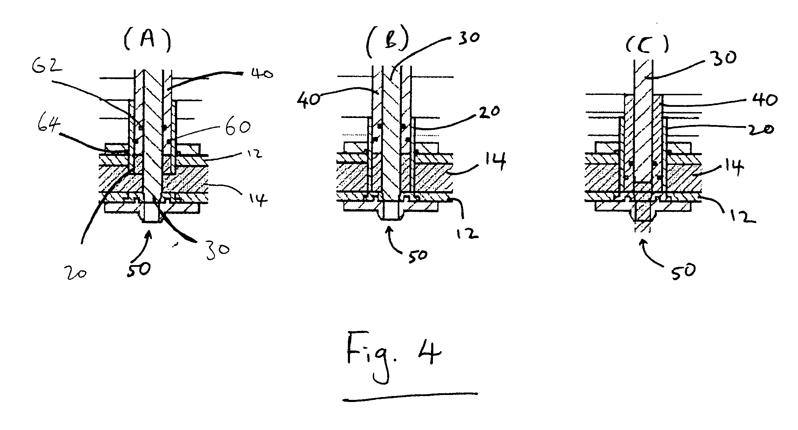

Moreover, such a small initial withdrawal of the piston 40 may help to clear the nozzle 50 of remnants of the pumpable mass so that movement of the shutoff member 30 to plug the nozzle (to return to phase (A)) does not result in a small amount of the pumpable mass remnant being dispensed, undesirably, from the nozzle. See, for example, Fig. 4 which provides a further schematic of phases (A) to (C). It can be seen from this representation of phase (C) that withdrawing the piston 40 by at least a small amount before (or whilst) the shutoff member is moved to replug the nozzle 50, should prevent the shutoff member 30 from urging any pumpable mass remnant in the nozzle 50 out through the nozzle 50.

Said small amount of movement of the piston 40 should provide an additional volume in the piston chamber which is greater than or equal to the decrease in the volume of the piston chamber resulting from the movement of the shutoff member to plug the nozzle. Means may be provided to control the simultaneous movement of the piston 40 and the shutoff member 30 to ensure that the corresponding movements are balanced to satisfy this requirement. Alternatively, the means may ensure that the piston is withdrawn sufficiently before the shutoff member is moved to replug the nozzle 50.

As shown in Fig. 4, the valve assembly may be provided with a dedicated sealing element (60, 62 and 64) between the piston 40 and the ingate member 20, between the piston 40 and the shutoff member 30 and/or between the ingate member 20 and the manifold 12. The sealing element may be an 'o' ring, e.g. made of a rubber, a plastics material or a metal. Alternatively, the seal may be an air seal. Sealing elements may not be required, e.g. if the ingate member 20, the shutoff member 30 and the piston 40 are made of respectively different materials, e.g. respective metals, to be of different hardness so that the interaction of at least the piston 40 with the ingate member 20 and the shutoff member 30 creates respective seals.

The ingate member 20 may include a beveled edge portion, e.g. a blade edge, so that when it is moved into the closed position it effectively slices through the pumpable mass. This has particular advantages where the pumpable mass includes solid particles, e.g. if the pumpable mass is a foodstuff which includes chocolate chips or biscuit fragments.

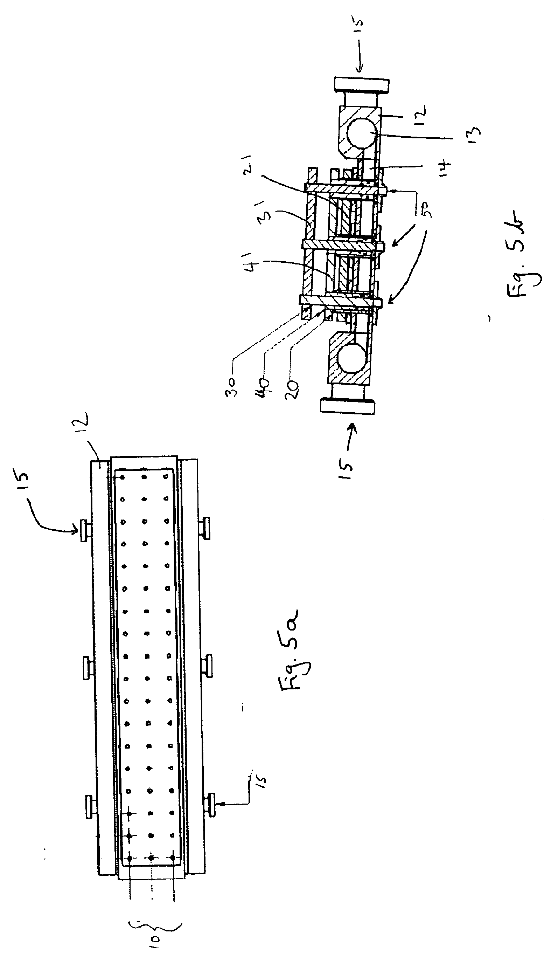

The valve assembly may be provided as a single valve assembly, or a plurality of valve assemblies may be provided in a row or an array e.g. as shown in Fig. 5a. The manifold 12 may include a supply conduit 13 for supplying the or each gallery 14 e.g. as shown in Fig. 5b.

Where a plurality of valve assemblies is provided, all of the like elements in the respective valve assemblies, e.g. the piston 40, may be controlled by an actuator common to each like element. So, for example, as shown in Fig. 5b, the piston 40 of each valve assembly may be movable by a piston lift plate 41; the ingate member 20 of each valve assembly may be movable by an ingate member lift plate 21; and/or the shutoff member 30 of each valve assembly may be movable by a shutoff member lift plate 31.

Alternatively, only the valve assemblies common to a particular row in a two-dimensional array of valve assemblies may be controlled in common in this manner.

However, a more flexible system is provided by controlling each valve assembly with a respective movement control means, e.g. a respective servo, for each valve assembly. By providing control of each individual valve assembly together with detection means for detecting the presence of an object proximate the respective nozzle 50, it is possible to overcome the problem of undesirable deposition of fluid from a particular nozzle when no object is present to receive the dose of deposited material (or when an unwanted object is present to interfere with the deposition).

For example, where food products are arranged in ranked rows, e.g. biscuits, on a conveyor belt to pass by an array of nozzles 50 to receive e.g. a topping from the nozzles, it is highly desirable to prevent the dispensing of the topping should one of the food products in the ranked rows be missing. Therefore, by including means for detecting the presence (or absence) of such a food product, it is possible to prevent the dispensing of e.g. the topping from the nozzle 50 directly onto the conveyor belt, which might ultimately affect the operation of the entire food processing plant.

Preferably the valve assembly according to the present invention is constructed from titanium and/or stainless steel. Preferably, the manifold 12 is constructed from titanium, but it may be constructed from stainless steel.

The arrangement shown in Figs. 5a and 5b may be used in combination with the present applicant's ORBIS system to achieve excellent results in the deposition of pumpable masses, such as fluid foodstuffs. Deposition rates of up to 100 machine cycles per minute can be achieved in this way.

The piston plate 41 is shown to be common to each valve assembly 10, but as described above this is a preferred arrangement and it is envisaged that each valve assembly could be individually controlled.

One or more ports 15 on the manifold 12 are provided to be coupled to a conduit for conveying a pumpable mass to the system, e.g. from a mixer. Preferably the manifold 12 supplies the or each gallery from both sides of the system to ensure an even and balanced distribution of pumpable mass, therefore there may be provided two or more ports 15, each being arranged to supply product to respective sides of a valve assembly according to the present invention, e.g. from a mixer.

The conduits and pipework for conveying the food product such as an aerated fluid can be enveloped in a housing, e.g. of stainless steel, within which temperature controlled fluid, such as water, can be passed in a counter flow direction.

The foregoing description of the preferred embodiments of the invention have been presented for purposes of illustration and description, it is not intended to be exhaustive or to limit the invention to the precise form disclosed, and modifications and variations are possible in light of the above teachings.

The following numbered paragraphs describe preferred aspects of the present invention:
1. A valve assembly for controlling the flow of a fluid from a dispensing nozzle, the valve assembly including:
   a shutoff member movable between an open position and a closed position to control the flow of fluid from the nozzle;
   an ingate member located upstream relative to the shutoff member, the ingate member partly defining a fluid chamber, the ingate member being movable between an open position and a closed position thereby controlling the flow of fluid into the fluid chamber; and
   a piston slidable in the fluid chamber; wherein
   when the ingate member is in the closed position and the shutoff member is in the open position, the piston is slidable from a first position to a second position to urge fluid in the fluid chamber to flow between the fluid chamber and the nozzle.
2. A valve assembly according to paragraph 2
   wherein the piston includes a bore along its sliding axis, and the shutoff member is movable within the bore to control the flow of fluid from the nozzle.
3. A valve assembly according to paragraph 1 or 2
   wherein said shutoff member is slidable to control the flow of fluid from the nozzle.
4. A valve assembly according to any one of the preceding paragraphs
   wherein said ingate member is arranged to surround the piston when the piston is in the second position and the ingate member is in the closed position.
5. A valve assembly according to paragraph 4
   wherein the piston is slidable within the ingate member.
6. A valve assembly according to any one of the preceding paragraphs
   further including a valve seat against which the ingate member abuts when in the closed position.
7. A valve assembly according to paragraph 6
   wherein the nozzle is in fluid communication with the fluid chamber via an aperture, the shutoff member plugging said aperture when in the closed position.
8. A valve assembly according to any one of the preceding paragraphs
   wherein a portion of each of the shutoff member, of the piston and of the ingate member partly define the fluid chamber.
9. A valve assembly according to any one of the preceding paragraphs
   wherein when the ingate member is in the closed position, the shutoff member is in the closed position and the piston is in the first position, the fluid chamber is provided as an annulus extending along at least a portion of the shutoff member.
10. A valve assembly according to paragraph 9
   wherein the annulus is a circular annulus, and the shutoff member, the piston and the ingate member are arranged to be concentric.
11. A valve assembly according to any one of the preceding paragraphs
   further including a first actuator means for moving the shutoff member between the open and closed positions.
12. A valve assembly according to any one of the preceding paragraphs
   further including a second actuator means for moving the piston between the first and second positions.
13. A valve assembly according to any one of the preceding paragraphs
   further including a third actuator means for moving the ingate member between the open and closed positions.
14. A valve assembly according to any one of paragraphs 11 to 13
   wherein the respective first, second and third actuator means are controllable independently of one another.
15. A food processing system having a valve according to any one of the preceding paragraphs.
16. A fluid dispensing system having a valve assembly according to any one of paragraphs 1 to 14.
17. A fluid dispensing system having a first group of a plurality of nozzles, each nozzle being associated with a respective valve assembly according to any one of paragraphs 1 to 14 for controlling the flow fluid from it.
18. A fluid dispensing system according to paragraph 17
   wherein the valve assemblies associated with said first group of nozzles are controlled in unison.
19. A fluid dispensing system according to paragraph 17 or 18 which dispenses foodstuffs.
20. A fluid dispensing system according to any one of paragraphs 16 to 19, including detector means for determining the presence of a body proximate to the or each nozzle, and a control means which, on the basis of said determination, controls whether the valve assembly allows fluid to be dispensed from the or each nozzle.
21. A method of operating a valve assembly according to any one of paragraphs 1 to 14
   The method including the steps of:
   (i) moving the shutoff member to the closed position
   (ii) moving the ingate member to the open position
   (iii) moving the piston to the first position
   (iv) moving the ingate member to the closed position
   (v) moving the shutoff member to the open position
   (vi) moving the piston from the first position to the second position.
22. A method according to paragraph 21
   wherein steps (ii) and (iii) are performed substantially simultaneously.
23. A method according to paragraph 21 or 22
   including the step of maintaining a fluid introduced to the fluid chamber within a predetermined pressure range when performing step (vi).
24. A method according to any one of paragraph 21 to 23
   including the step of determining the presence of a body proximate to the nozzle.
25. A method according to paragraph 24
   including the step of controlling the valve assembly to dispense fluid from the nozzle on the basis of said determination.
26. A valve assembly substantially as described herein with reference to figures 2 to 5.
27. A method of operating a valve assembly substantially as described herein with reference to figures 2 to 5.

## Claims

1. A fluid dispensing system having a valve assembly for controlling the flow of a fluid from a dispensing nozzle, the valve assembly including:
a shutoff member movable between an open position and a closed position to control the flow of fluid from the nozzle;
an ingate member located upstream relative to the shutoff member, the ingate member partly defining a fluid chamber, the ingate member being movable between an open position and a closed position thereby controlling the flow of fluid into the fluid chamber; and
a piston slidable in the fluid chamber; wherein
when the ingate member is in the closed position and the shutoff member is in the open position, the piston is slidable from a first position to a second position to urge fluid in the fluid chamber to flow between the fluid chamber and the nozzle;
the system further including
detector means for determining the presence of a body proximate to the nozzle, and
control means which is configured to control, on the basis of said determination, whether the valve assembly allows fluid to be dispensed from the nozzle.

2. A fluid dispensing system according to claim 1
wherein the piston includes a bore along its sliding axis, and the shutoff member is movable within the bore to control the flow of fluid from the nozzle.

3. A fluid dispensing system according to claim 1 or 2
wherein said shutoff member is slidable to control the flow of fluid from the nozzle.

4. A fluid dispensing system according to any one of the preceding claims
wherein said ingate member is arranged to surround the piston when the piston is in the second position and the ingate member is in the closed position.

5. A fluid dispensing system according to claim 4
wherein the piston is slidable within the ingate member.

6. A fluid dispensing system according to any one of the preceding claims
further including a valve seat against which the ingate member abuts when in the closed position.

7. A fluid dispensing system according to claim 6
wherein the nozzle is in fluid communication with the fluid chamber via an aperture, the shutoff member plugging said aperture when in the closed position.

8. A fluid dispensing system according to any one of the preceding claims
wherein a portion of each of the shutoff member, of the piston and of the ingate member partly define the fluid chamber.

9. A fluid dispensing system according to any one of the preceding claims
wherein when the ingate member is in the closed position, the shutoff member is in the closed position and the piston is in the first position, the fluid chamber is provided as an annulus extending along at least a portion of the shutoff member.

10. A fluid dispensing system according to claim 9
wherein the annulus is a circular annulus, and the shutoff member, the piston and the ingate member are arranged to be concentric.

11. A fluid dispensing system according to any one of the preceding claims
further including a first actuator means for moving the shutoff member between the open and closed positions;
and/or a second actuator means for moving the piston between the first and second positions;
and/or a third actuator means for moving the ingate member between the open and closed positions.

12. A fluid dispensing system according to claim 11
wherein the respective first, second and third actuator means are controllable independently of one another.

13. A fluid dispensing system according to any one of claims 1 to 12 having a first group of a plurality of said nozzles, each nozzle being associated with a respective valve assembly for controlling the flow fluid from it.

14. A fluid dispensing system according to claim 13, wherein the detector means is configured to determine the presence of a body proximate to each nozzle, and a control means which is configured to control, on the basis of said determination, whether each valve assembly allows fluid to be dispensed from its respective nozzle.

15. A method of operating a fluid dispensing system according to any one of claims 1 to 14
the method including the step of controlling the valve assembly to dispense fluid from the nozzle by:
(i) moving the shutoff member to the closed position
(ii) moving the ingate member to the open position
(iii) moving the piston to the first position
(iv) moving the ingate member to the closed position
(v) moving the shutoff member to the open position
(vi) moving the piston from the first position to the second position;
the method further including the steps of
determining the presence of a body proximate to the nozzle; and
controlling the valve assembly to dispense fluid from the nozzle on the basis of said determination.
